# EUROPEAN PATENT SPECIFICATION

(11) **EP 4 625 892 B1**
(45) Date of publication and mention of the grant of the patent: **26.08.2026**
(21) Application number: 24305491.3
(22) Date of filing: 29.03.2024
(51) Int. Cl.: H04L 12/40, H04L 45/00, H04L 47/30, H04L 47/34, H04L 47/56, H04L 67/568

(54) **SHAPING METHOD FOR FRAME TRANSMISSION IN A WIRED COMMUNICATION NETWORK, DEVICE AND CORRESPONDING COMPUTER PROGRAM**
FORMUNGSVERFAHREN ZUR RAHMENÜBERTRAGUNG IN EINEM VERDRAHTETEN KOMMUNIKATIONSNETZWERK, VORRICHTUNG UND ENTSPRECHENDES COMPUTERPROGRAMM
PROCÉDÉ DE MISE EN FORME POUR LA TRANSMISSION DE TRAMES DANS UN RÉSEAU DE COMMUNICATION FILAIRE, DISPOSITIF ET PROGRAMME D'ORDINATEUR CORRESPONDANT

(43) Date of publication of application: 01.10.2025
(73) Proprietor: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: ROLLET, Romain, 35708 RENNES CEDEX 7 (FR)
(74) Representative: Plasseraud IP

(56) References cited:
- EP-A1- 2 479 925
- EP-A1- 2 629 470
- WO-A1-2016/061143
- US-A1- 2015 143 144
- US-A1- 2020 259 896

## Description

### 1. Domain

The disclosure relates to the domain of frame transmission in wired communication network. The disclosure more specifically relates to the optimisation of the transmission of frames in a wired communication network to optimize idle periods of the transmission system in an energy saving perspective.

### 2. Prior Art

While sustainability and ecodesign of product becomes a selection criterion in many situations, many domains remain unreachable because of incompatibility between operative constraints and environment preservation constraints. This is the case for example in wired transmission technologies.

US 2020/259896 A1, WO 2016/061143 A1, US 2015/143144 A1, EP 2 629 470 A1, EP 2 479 925 A1 are exemplary disclosures of Time-Sensitive Networking.

Indeed, Time-Sensitive Networking (TSN) is an IEEE 802.1 defined standard technology that ensures deterministic messaging on standard Ethernet. The standard is intensively used in time critical information transmission like manufacturing or automotive applications. The key to timely delivery of TSN frames lies in 802.1Qbv, which schedules the transmission of specific TSN Ethernet frames in a cyclic TDMA way. This synchronization of all network nodes enables quick and low-jitter delivery of critical communication. TSN standards by IEEE 802.1 encompass three main components: time synchronization using IEEE 1588 Precision Time Protocol, scheduling and traffic shaping for different traffic classes, and selection of communication paths with fault-tolerance mechanisms. Within the scheduling component, users can choose from various access control and scheduling mechanisms for processing Ethernet frames based on priority, including existing methods like IEEE 802.1Q strict priority scheduler or new methods like the TSN IEEE 802.1Qbv time-aware traffic scheduler.

The IEEE 802.1Qbv time-aware scheduler is designed to organize communication on an Ethernet network into fixed-length, repeating time cycles. These time-cycles can be divided into configurable time slots allocated to different traffic classes and/or frame transmission queues. This mechanism allows exclusive use of the Ethernet medium for traffic classes with strict real-time requirements, ensuring uninterrupted transmission of time-critical data without buffering delays. Time slots (of time cycles) act as virtual communication channels, separating critical communication from non-critical traffic. For instance, in industrial applications, specific time slots can be dedicated to critical industrial field-bus frames while others handle non-time-sensitive traffic.

On the other side, Energy Efficient Ethernet (EEE) is an IEEE standard (802.3az-2010) method aimed at reducing energy consumption by Ethernet devices during low link utilization periods. This approach, known as Low Power Idle (LPI), involves transitioning between "Active" and "LPI" states to save energy by turning off unused circuits and maintaining synchronization for rapid reactivation. In the "LPI" state, power consumption drops significantly compared to the active state, showcasing the benefits of EEE in networks with numerous nodes. For instance, a 1Gbps Network Interface Card (NIC) in idle state with EEE can consume as little as 40% of the power used in the active state, highlighting the efficiency gains of this technology.

However, to date, enabling EEE introduces some latencies in frame transmission that are completely incompatible with stringent requirements of TSN data flows with the 802.1Qbv scheduling. For instance, when fixing a short time cycle and short time slot for each traffic queue, it is crucial to start frame emission at the beginning of the time slots so that all pending frames can be effectively sent within the current time slot. Otherwise, if some pending frames cannot be transmitted, they will suffer a delay equal to one time-cycle which is unacceptable by the receiving peer application. Using EEE then adds transmission delay due to the waking-up period of the transmission components which may lead to the impossibility to transmit all pending frames in the next dedicated time slot.

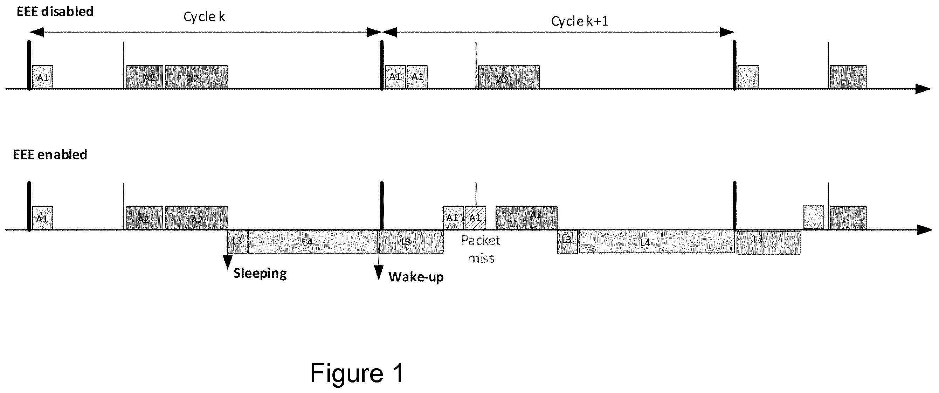

Figure 1 illustrates the delay introduced by EEE. Time-cycles (cycle k, cycle k+1) are divided in two (fixed) time slots. First time slot is dedicated to traffic class with critical requirements (A1). Second time slot is dedicated to traffic class with noncritical requirements (A2). L4 periods indicate LPI mode, and L3 period transitions from active to LPI, or LPI to active. For example, it is noted that with EEE enabled, L3 and L4 periods lead to the impossibility of transmitting the second A1 frame in time (i.e. before the end of the time slot dedicated to A1 frames).

Using 802.1Qbv scheduling with several traffic classes also leads to fragment the burst emission of pending frames. Indeed, as the time-cycle is split into different time slots dedicated to each traffic class (as exemplified in figure 1), each time slot may not fully fulfilled and the transmitter cannot transmit a burst of frames as it will do with the legacy Ethernet MAC. Consequently, the transmitted traffic is a set of shorted burst of frames spaced with short idle period. This kind of traffic is not adapted to EEE since it requires a minimum idle period to be efficient for energy saving.

In addition, as frames of different priority are sent in separate and unfilled time slot, some idle periods are inserted between the time slot. Most of the time, those idle period are too short to enable LPI mode which lead to a poor efficiency from the energy angle.

So there is a need for a shaping method that is able to:
- Deal with EEE introduced latencies so that critical pending frames can be fully transmitted in the intended time-cycle, preserving the receiver peer from unexpected (and inacceptable) delays.
- Optimise data traffic within a given IEEE802.1Qbv time-cycle while dealing with dedicated time slots in order to maximise the idle periods duration.

### 3. Summary

Hence, the disclosure relates to a method for a shaping method for the transmission of data frames within a communication network, the shaping method being implemented by an electronic device comprising at least one processor and a memory. According to the disclosure, the method comprising the following steps:
- determining, for at least one current queue of a set of transmission queues, frames to be transmitted for this at least one current queue,
- calculating, as a function of the number of frames to be transmitted for this at least one current queue, at least one delay between the end of a transmission of frames to be transmitted and the beginning of a next time slot for transmission of frames of the at least one current queue,
   and comprising:
   - when the at least one delay is greater than a predetermined amount of time, setting a network controller to an idle mode as a function of the at least one delay.

Hence the proposed method is compatible with both requirement of real time frame transmission associated with specific transmission classes and with requirement to save energy in devices in a sustainable manner.

According to a specific feature, prior to setting the network controller to the idle mode, the method comprises transmitting frames that are set to be transmitted for the at least one current queue.

According to a specific feature, at least some of the queues of the set of transmission queues are labelled as Critical Cyclic or Delay Tolerant, and wherein calculating the delay is function of the label associated with the queues of the set of transmission queues.

Hence, this able grouping queues in two sets of transmission queues, that are to be managed separately, in some situations, by allowing a different transmission process to be implemented.

According to a specific feature, calculating is implemented as a function of repeated time slicing for frame transmission during a transmission cycle, said repeated time slicing defining time slots, each time slot being allocated to the at least one current queue of the set of queues.

Hence, in some situation, the idle mode can be entered for more than a time cycle, which increase the energy savings.

According to a feature, each frame present in the at least one current queue of the set of queues is affected with a time-to-live value, the time-to-live value of each frame depending on a label associated to the transmission class of the at least one current queue in which the frame is inserted and/or depending on a number of time-cycle for transmitting the frame.

According to a feature, for each of the at least one current queue associated to a transmission class, calculating comprises:
- calculating a next emission time value by using the minimum time-to-live value of the pending frames of the at least one current queue, the total duration of pending frames of the at least one current queue and the time start of the next time slot dedicated to the transmission class in the next transmission time-cycle,
- calculating a burst duration value for the transmission class.

According to a feature, calculating further comprises:
- If total frames duration is greater than the time slot duration, next emission time is set to the start of next time slot of the next time-cycle for the transmission class and burst duration value is set to the time slot duration,
- Otherwise, if the minimum time to live is equal to 0, the burst duration value is set to the sum of duration of frames that have to be sent before all frames with minimum duration and the next emission time is set to the end of time slot minus the burst duration value,
- Otherwise, the next emission time is set to the start time of the time slot of time-cycle n+TTL.

According to a feature, the method is executed upon predetermined events belonging to the group comprising at least:
- after the transmission of the frames of a frame burst,
- on the expiration of a wake-up timer, the wake-up timer being set as a function of the at least one delay,
- on a frame insertion in at least one queue of the set of queues.

According to a feature, after the transmission of the frames of a frame burst, the method further comprises:
- calculating the duration of the delay and set a wake-up timer as a function of a waking-up time as negotiated at link startup, wherein the end time of the delay is the smaller of next emission time among the queues of the set of transmission queues, minus the wake-up required time,
- using the end of the delay to set an internal wake-up timer.

According to a feature, an energy control mechanism of the network controller implements the following steps, during the setting a network controller to the idle mode:
- activating a Low Power Idle mode to move a MAC and PHY layers of the controller in an idle Energy Efficient Ethernet state,
- determining which highest Active State Power Management level that can be entered by comparing the delay to at least some of Active State Power Management predetermined transition time values,
- Setting a Latency Tolerance Reporting maximum value as a function of the determined Active State Power Management level to inform the underlayer hardware.

According to a feature, on the expiration of a wake-up timer, the wake-up timer being set as a function of the at least one delay, the method further comprises:
- for each queue of a transmission class, determining a next emission time,
- determining the next burst that is composed of the burst of frames of each queue, wherein determining composition and active burst duration comprising at least one iteration of:
   - obtaining a queue and its associated next emission time value,
   - determining if the next emission time value is greater than a minimum supported LPI period duration, and if so interrupt determination of the next burst,
   - otherwise, adding the frames of the queue to the composition of burst, and
   - add the queue scheduled burst duration to the active burst duration value.

According to a feature, prior to obtaining the queue and its associated next emission time value, determining the next burst comprises ordering the set of queues by increasing value of their next emission time.

According to a feature, on a frame insertion in at least one queue of the set of queues, the method further comprises:
- setting a time-to-live value to the frame that being inserted in said at least one queue,
- If a current transmission mode is active, determining that the at least one queue belongs to the currently emitted burst, and
- updating the burst duration value and the active burst duration value.

According to another aspect, the disclosure also relates to a shaping device for the transmission of data frames within a communication network, the shaping device comprising at least one processor and a memory and comprising the necessary components for:
- determining, for at least one current queue of a set of transmission queues, frames to be transmitted for this at least one current queue,
- calculating, as a function of the number of frames to be transmitted for this at least one current queue, at least one delay between the end of a transmission of frames to be transmitted and the beginning of a next time slot for transmission of the frames of the at least one current queue,
   and comprising:
   - when the at least one delay is greater than a predetermined amount of time, setting a network controller to an idle mode as a function of the at least one delay.

According to an aspect, the disclosure also relates to a service in which the method and apparatus are used to make energy power savings.

The present disclosure aims also at a computer program comprising instructions causing the implementation of the method defined above when such instructions are run by a processor.

### 4. Drawings

More details are presented in the specification below, with reference to the appended drawings where:
- Figure 1, already presented, shows a simple example of Energy Efficient Ethernet implementation with respect to critic frames to transmit,
- Figure 2 illustrates the main steps of the shaping method according to the disclosure,
- Figure 3 illustrates the performances obtained by the implementation of the method of the disclosure in an example,
- Figure 4 shows the management of the time to live of frames in a purely illustrative example,
- Figure 5 illustrates an example of cyclic transmission of CC labelled frames,
- Figure 6 shows an example of burst creation and idle mode (LPI) by an embodiment of the method of the disclosure,
- Figure 7 illustrates an example of device for implementing the method according to the disclosure.

### 5. Description

### 5.1. General disclosure

As introduced above, with the emergence of Industry 4.0, the number of connected Ethernet devices increases, and also the devices used for interconnection such as switch. So, the need of an efficient energy saving mechanism such as proposed in the shaping method is crucial.

The disclosure relates to a shaping method, which is for example adapted to a TSN Ethernet transmitter using the IEEE 802.1Qbv time-aware scheduler. The method enabled reducing energy consumption by managing the Energy-Efficient Ethernet (EEE) set of enhancement introduced by IEEE 802.3az standard while preserving the QoS of the different data flows.

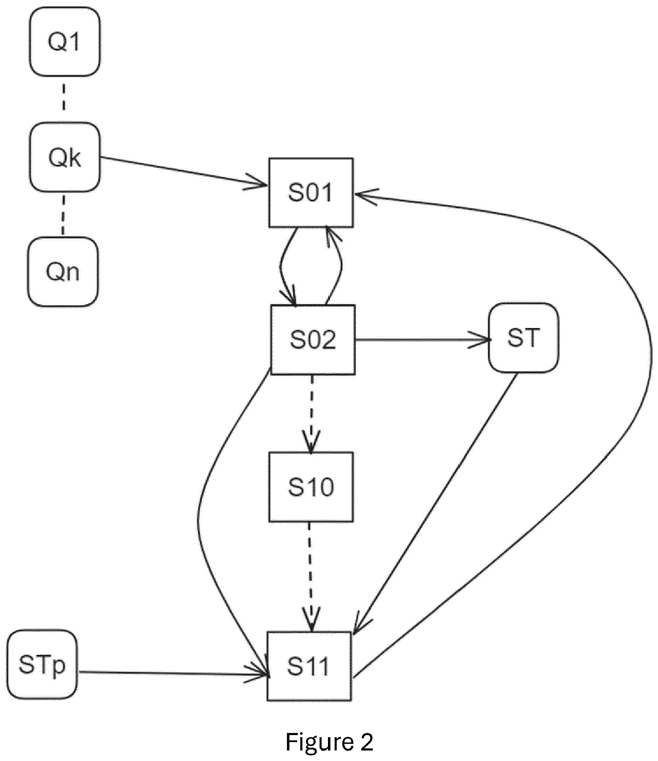

More generally, with respect to figure 2, the shaping method comprises:
- determining (S01), for at least one current queue (Qₖ) of a set of transmission queues (Q₁, Q₂; ..., Qₙ), frames to be transmitted for this at least one current queue (Qₖ),
- calculating (S02), as a function of the number of frames to be transmitted for this at least one current queue (Qₖ), at least one delay between the end of a transmission of frames to be transmitted and the beginning of a next time slot for the at least one current queue (Qₖ),
   and comprising:
   - when the at least one delay is greater than a predetermined amount of time (STp), setting (S11) a network controller to an idle mode as a function of the at least one delay.

As a function of whether some frames must be transmitted or not, the method implements, prior to setting (S11) the network controller to the idle mode, transmitting (S10) (a burst of) frames that are set to be transmitted for the at least one current queue (Qₖ).

As exposed in some examples, all or some of the queues of the set of transmission queues (Q₁, Q₂; ..., Qₙ) are labelled as Critical Cyclic (CC) or Delay Tolerant (DT). Also, calculating (S02) the delay is done as a function of the label associated with the queues of the set of transmission queues (Q₁, Q₂; ..., Qₙ).

Also calculating (S02) is implemented as a function of repeated time slicing (time slots) for frame transmission during a transmission cycle (cycleₖ, cycleₖ₊₁), said repeated time slicing defining time slots (slot₁, slot₂, ..., slotₙ), each time slot being allocated to the at least one current queue (Qₖ) of the set of queues (Q₁, Q₂; ..., Qₙ).

In some implementations the shaping method calculates the time location and the duration of frame bursts according to parameters and state of transmission queues. It also manages EEE low-power idle (LPI) entries (sleeping, idle) and exits (wake-up), as a function of the predetermined amount of time (STp) which depends, as it is exposed herein after, of the hardware (the network controller interface for example). While implemented, the shaping method allowed:
- respecting the stringent latency constraints of each traffic classes,
- maximizing the duration of the "idle" (LPI) periods, so that the efficiency of the energy saving mechanism is increased,
- in some embodiments, managing additional power saving mechanism such as PCle ASPM.

To deal with latency issues, in an implementation, the method introduced a QoS parameter attached to each traffic class. This QoS parameter indicates the traffic class type, that is either "critical cyclic" with predictable traffic but zero-delay tolerance; or "delay tolerant" with an unpredictable traffic feature. For delay tolerant" traffic class, each pending frames (i.e. frames that are inserted in a traffic class queue and waiting for transmission) has an attached Time-To-Live (TTL) parameter expressed as a number of cycle unit. The shaping method guarantees that any frames are transmitted before their TTL parameter reaches 0.

The shaping method can be implemented in industrial communication system using gigabit Ethernet and TSN IEEE802.1Qbv, in particular for the new generation of PLCs or industrial IOs/Motor driver devices. It can also be deployed over TSN switch that needs to support the Energy Efficient Ethernet standard. An important feature of the shaping method, in at least one implementation, is its ability to support the QoS required by the industrial environment, and in particular the strong latency constraints. Usually, in such environment, the network is not overhauled because non-critical data flows are generated by mostly control/management applications with low bandwidth requirements (sporadic traffic). Consequently, long idle periods are obtained in time slots dedicated to delay tolerant traffic classes. In consequence, the shaping method provides important energy saving since LPI mode can be activated.

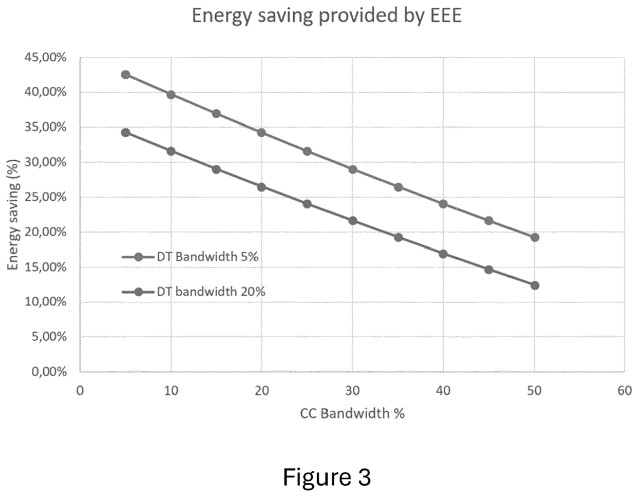

Figure 3 illustrates the benefit of the shaping method in term of energy saving in two TSN configuration with 5% (respectively 20%) bandwidth used by "Delay Tolerant" traffic classes.

For example, if the sum of time slots dedicated to CC TC represents 30% bandwidth, then the expected energy reduction is equal to around 30% for low-charged network, and 21% for network with more DT traffic. Considering a network with 64 nodes consumes around 100W (considering only the network interface), it represents a gain of 30/21W, which is very significant.

### 5.2. Description of an embodiment

In this embodiment, it is supposed that some traffic classes are associated to at least two different types of data flows. More specifically, traffic classes are split in two groups: Critical Cyclic (CC) and Delay Tolerant (DT) traffic classes: the traffic classes are labelled as either Critical Cyclic (CC) or Delay Tolerant (DT).

*"Delay Tolerant"* traffic classes (TCs) (traffic classes labelled as *"Delay Tolerant"*) carry network data flow that accept delay transmission such as TCP/IP application data flow, or more generally any usual IT data flow transmitted over the Internet. In order to assume a minimum Quality of Service, a Time-To-Live (TTL) parameter is attached to every transmit frame entering in pending transmission queues. This parameter is used by the shaping method to bound the delay transmission: the objective is to allow a kind of delay in the transmission of frames, for instance when a queue comprises more frames that the number of frames that can be transmitted during a given time slot.

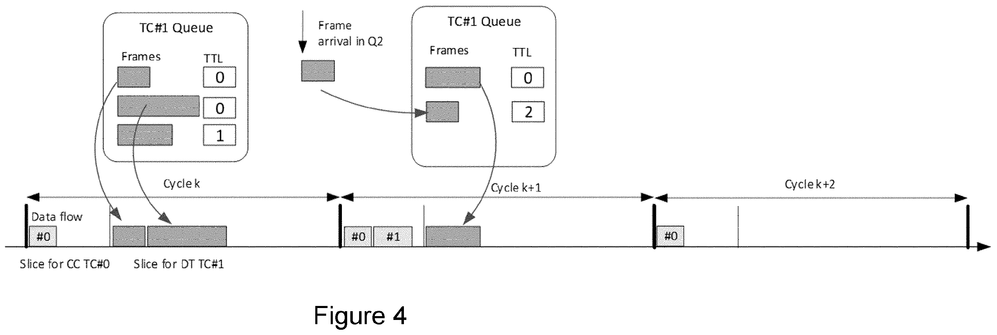

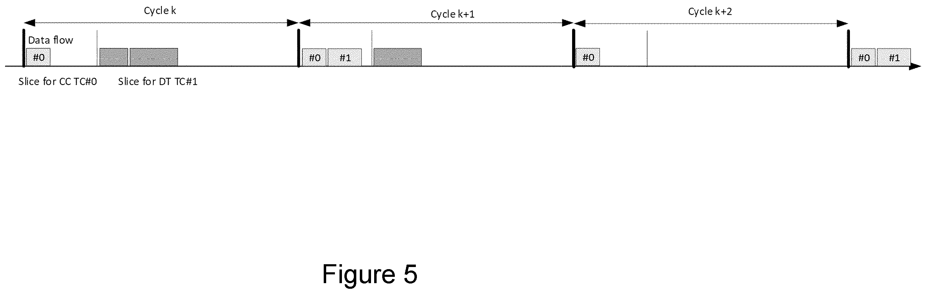

Figures 4 and 5 illustrate management of a Delay Tolerant Transmission Class queue with TTL update every cycle. The TTL is expressed as a number of network cycle times and essentially depends on the duration of a cycle versus the duration of the time slot of the queue. The TTL is decremented every cycle for pending frames: if one frame is not transmitted during a current cycle (k), then at next cycle (k+1), the TTL of this non transmitted frame is decreased by one. The shaping method transmits frames with TTL that are equal to 0 with priority. Frames with TTL greater than 0 can be transmitted in later cycles when the time slot is shorter than the time needed to transmit the frames of the queue.

According to the disclosure, for each DT TC queue, a *TTL starting value TSVₖ* is used to fix the TTL when the frame enters the queue "k" (Qₖ). This starting value depends on the stream identifier mechanism. This stream identifier mechanism may rely on VLAN ID, VLAN PCP, or combination of protocol header values such as MAC address, IP address, Ether Type, TCP/UDP ports, etc... It is considered that *TSVₖ* is strictly greater than 0.

According to the disclosure, the Critical Cyclic (CC) labelled traffic classes carry cyclic network data flows that are usual in field bus network. For instance, an industrial device will transmit its I/O states in an Ethernet frame at a fixed time period, that is a multiple "L" of the field bus network cycle time. So, the associated network data flows is an Ethernet frame of length I transmit every "L" cycle (e.g., every cycle, or every two cycle, or every three cycle, etc.). For example, a first device may transmit CC frame every network cycle, while a second device may transmit a CC frame every two cycles. The switch, in charge of relaying the transmission, may thus have only one frame to transmit at a first cycle and two to transmit at the second cycle.

It results the number and the length of Ethernet frames transmitted for a given CC labelled TC#m are predictable for any cycle #L. So, the burst duration for traffic class *m* and cycle *L* is noted BD_{*m*,*L*} in the following. BD_{*m*,*L*} can be computed at the initialization and is represented by a serie BD_{m,n}.

In Industrial Automation (IA) network, cyclic network data flows cannot suffer delay. For TSN Qbv application, it means the time slot is long enough to transmit every pending Ethernet frames. Frames are usually prepared by the application layer and post into a pending queue before a time limit so that the MAC layer can transmit them in the next cycle.

To unify the shaping method, some virtual queues are associated for CC traffic classes. At each cycle, the virtual queue is set with the serie BD_{m,n}. TTL for frames of CC traffic classes is set to 0.

According to the disclosure, for example based on the above class definition, the described Shaping method is implemented. The shaping method determines the composition and start time of frame transmission by optimizing the idle period in which LPI mode can be activated. It takes as input the time slots (the slots for the transmission cycles) defined by the IEEE 802.1Qbv shaper, and the state of queues that is the number of pending frames, their size, and the frame TTL values. The shaping method also determines the duration of the LPI periods.

According to the disclosure, the shaping method operations are for example executed upon three different events:
- at the end of emission of a frame burst (i.e. after transmission of the last frame of a burst),
- at the expiration of a wake-up timer set when the network interface enters LPI mode,
- after a frame insertion in a queue,

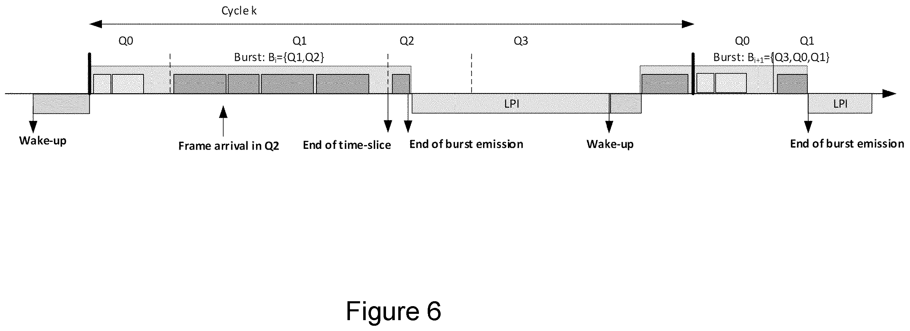

Other events can of course be taken into account with respect to the implementation of the method. Shaping method runs in conjunction with an energy control mechanism. The energy control mechanism in charge of actually activating/disabling the LPI mode and setting the power management parameters. The network interface can either be set in *active* mode or *LPI* mode. When in active mode, it enables the network interface to transmit a burst (noted Bₙ) of Ethernet frames that belongs to the set of the queue for this transmission class TC. In other words, Bₙ is the composition of the burst in term of frames belonging to several TC (and several queues) as it is illustrated, for exemplification only, in figure 6, for bursts Bᵢ and Bᵢ₊₁.

When the LPI mode is enabled (like between bursts Bᵢ and Bᵢ₊₁, figure 4), the MAC suspends any frame emission whatever the status of the transmission queue. The LPI mode is enabled by the shaping method. In the LPI mode, a PCle network controller may also be in PCle ASPM mode, the depth of this low-power mode (L0s, L1, L2) depending on the time allocated to the idle period (an example of the implementation of the depth of the idle is exposed below with a PCI Express Architecture).

When in active mode, the MAC sends frames of a transmission queue as soon as the time slot dedicated to the associated queue (i.e. TC) starts. It means that the transmitter transmits any pending frames from a transmission queue while the associated time slot is not terminated, without presuming from the TTL of the transmitted frames (but by prioritizing the frames with the lowest TTL in case the queue is bigger that the available time slot for the queue allows).

For each frame transmission queue (Qₖ) associated to a transmission class TCₖ, the shaping method maintains, in an embodiment, a value called *"next emission time"* NETₖ that is calculated by using the minimum TTL of the pending frames, the total duration of pending frames (sum of duration of individual pending frames) and the time start of the next time slot dedicated to the transmission class TCₖ. It also maintains a burst duration value BD_{TCk}.
- If total frames duration is greater than the time slot duration, then NETₖ is set to the start of next time slot of the next cycle for the transmission class TCₖ. Burst duration value is set to the time slot duration,
- Otherwise, if the minimum TTL is equal to 0, then the burst duration BD_{TCk} value is set to the sum of duration of frames that must be sent before all frames with minimum duration. The next emission time is set to the end of time slot minus BD_{TCk},
- Otherwise, the next emission time is set to the start time of the time slot of cycle n+TTL.

Thanks to this orchestration, as shown in example of figure 4, the shaping method allows obtaining large periods of times where the LPI mode is enabled, thus enabling important reduction of the energy consumption.
In addition to the previous calculation steps, the following operations are executable upon at least the listed events.
a. After emission of a frame burst, the shaping method comprises the following steps:
   - calculation of the duration of the LPI period and set a wake-up timer taking into account the waking-up time as negotiated at link startup in accordance with the IEEE 802.3az standard. The end time of the LPI period is the smaller next emission time NETₖ among all TC queues, minus the wake-up required time.
   - Setting up an internal wake-up timer by using the calculated end of LPI period. The energy control mechanism then implements the following steps:
   - activation of the LPI mode to move immediately the MAC and PHY layers of the controller in the idle EEE state,
   - determination of the highest ASPM level that can be entered by comparing the LPI period duration to the ASPM transition time values,
   - setting the PCIe Latency Tolerance Report (LTR) maximum value taking into account the determined ASPM level to inform the underlayer hardware.
b. At the expiration of the wake-up timer, the shaping method comprises the following steps:
   - For each TCₖ (i.e. Qₖ), it determines the next emission time NETₖ, for example as detailed above.
   - Determine the next active burst Bₙ that is composed of the burst of frames of each transmission class queue, determining composition and active burst duration BDₙ by running through the different queue k ordered by increasing NETₖ
      ∘ Get the next TCₖ (associated to its queue). If NETₖ is greater than the sum of BDn and the minimum supported LPI period duration, stop the process (meaning this queue and successive ones can be omitted from the burst Bₙ). Otherwise, add the frames of the queue of TCₖ to the composition of burst Bₙ and add the TC scheduled burst duration (i.e. usually the entire time slot associated to the TC) to the active burst duration value BDₙ,
      ∘ Repeat the process until all the queues have been managed.
      The energy control mechanism then implements the following steps:
      ∘ It disables LPI mode to move immediately the MAC+PHY layers of the controller in the active state.
c. Upon frame insertion in one queue k, the following operations are executed:
   - Set TTL to the TTL *starting value TSVₖ*
   - If current mode is active, check if TCₖ belongs to the currently emitted burst Bₙ. If yes, then update BD_{TCk} and the active burst duration value BDₙ by executing the algorithm described for the expiration of the wake-up timer.

As a function of the implementation conditions, on one side, and as a function of the available network controller on the other side, the depth of the shutdown during the Idle state is controllable.

Indeed, with respect to the PCI express architecture as an example, the PCI Express Active State Power Management (ASPM) can for instance be used to lower system level idle power, on both the network controller and the PCI express controller. ASPM allows individual serial Links in a PCI Express fabric to have power incrementally reduced as a Link becomes less active. It introduces two power level states, L0s and L1. L0 is the default active state of the bus. When a board is in the D0 active state, the PCI Express link can be in a lower power (L0s/L1 state), so reducing the system level power. When entering L0s, the device moving into this power saving state will send an Electrical Idle Ordered Set (EIOS) to the receiving device, then turn off power to its transmitter. When returning from L0s to L0, the device first generates a specific number of small Ordered Sets known as Fast Training Sequences (FTS). The specific number to be repeated is defined by the receiving device and broadcast during Training Sequences at link up time. The more FTS that are transmitted, the easier it is to obtain receiver lock on the transmitted signal. However, the object of L0s is to regain receiver lock and be able to receive traffic as quickly as possible, so the receiving device usually selects the smallest possible number of FTS that ensure clock recovery based on its specific design.

ASPM also defines a L1 ASPM state, which is optional and can be entered to achieve a greater degree of power conservation. In this state, both directions of the link are placed into the L1 state. L1 shuts off PCI Express link completely, including the reference clock signal, until a dedicated signal (CLKREQ#) is asserted. Return to L0 requires both devices to go through the Link Recovery process. This results in a greater latency to return to L0, so this power state would typically be used when activity on the link is not expected for some significant time period (e.g., several milliseconds).

Practically, it is observed ASPM can introduce latency around 5µs to recover from L0s and up to 60µs from L1. So, it has a high impact on the PCIe device performance since it adds delays on DMA (Direct Memory Access) transfers and interrupts. In addition to the "regular" L1 state, some additional substates may also be available, so as to lower the power consumption while allowing a relatively quicker return to L0. Hence, the predetermined amount of time (STp) essentially depends on theses latency values, so that entering into idle mode is performed when the duration of the idle period is greater than the latencies introduced by entering low power and waking up.

The fundamental mechanism behind L1 sub-states is to use a technique other than the high-speed logic inside the PCIe transceivers to wake the devices. This is done by adding additional functionality to an existing PCIe pin (CLKREQ#) to provide a simple signalling protocol. Two of these new sub-states are defined: L1.1 and L1.2 providing their own power vs. exit latency trade-off choices. Both L1.1 and L1.2 permit the PCIe transceivers to turn off their PLLs along with their receivers and transmitters, while L1.2 even allows turning off the common mode keeper circuits. So there is an important reduction in idle power consumption, where 10's of milliwatts of power in an L1 state will be reduced by orders of magnitude in L1.1 or L1.2 sub-states. According to the disclosure, the shaping method allows using both sub-states.

When no data needs to be transmitted, according to the disclosure, a request to enter "transmit LPI" mode is issued on the internal xxMll (physical layer (PHY) interface used in Ethernet networks to transmit data between a MAC (Media Access Control) layer and a PHY layer) Tx interface causing the PHY to transmit sleep symbols for a pre-defined period of time followed by a quiet period. During LPI, the PHY periodically transmits refresh symbols that are used by the link partner to update adaptive filters and timing circuits in order to maintain link integrity. The PHY communicates to the link partner the move to active link state by sending wake symbols for a pre-defined period of time.

The following conditions are evaluated to enter Tx-LPI (one condition is enough):
- No transmission is pending during a predefined period (empty Tx queues): this period is set to avoid frequent entry into TX LPI state for short durations which is inefficient by adding latencies,
- Pause frame reception (suppose Flow Control is activated),
- Software control.

Controller exits Tx LPI link state and transition link into active link state when none of the above conditions are true. Thanks to the shaping method, the implementation of the first condition is software controlled (on the network controller), which enables entry in the LPI state.

Depending on the implementation, some controllers are also able to automatically send LTR message when entering/exiting LPI state. One method is to predefine two LTR (Link Training and Status Register) values, one minimum and one maximum value respectively targeting stringent and relax latencies. When entering LPI, the NIC hardware automatically sends a PCIe LTR message with the maximum value to indicate to PCle controller that it can supports longer delay. The same operation is done with the LTR minimum value when exiting LPI state.

Depending on the LTR maximum value, the PCle host controller may enter either L1.1 or L1.2 substates when the network controller enters LPI state, which helps reducing more the energy consumption.

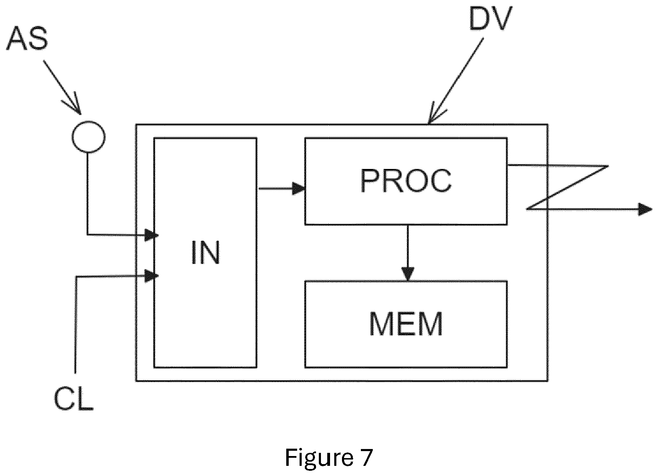

As shown in figure 7, the device DV for shaping for the transmission of data frames within a communication network as presented above, can comprises an antenna system AS, for example coupled through an interface IN to a processing circuit including a processor PROC and a memory MEM. Alternatively, or in complement, or as a variant, of the antenna system AS, necessary data (e.g., a state of the queues, predetermined parameters, PCIe controller parameters, network controller parameters and state (active, idle)) can also be received thru a communication link CL allowing the device to generate the set of test vectors. The memory stores at least instructions of a computer program according to the present disclosure. By carrying out this type of processing, and in particular by implementing the data structures (queue management, transmission class labelling, time to live and next emission time,) according to the method of the disclosure, the device's processor has proven to be able to generate an optimal transmission of the frames of the different queues, in a short period of time, in order to efficiently manage EEE period, saving power, while maintaining the transmission of critical frames. Such an effect is obviously not possible by attempting to calculate or obtain these results manually or mentally, as this would be resource-consuming, inefficient, and not exploitable as explained herein above.

In preferred embodiments, the computer system or device comprises one or more processors (which may belong to a same computer or to different computers) and one or more memories (magnetic hard disk, optical disk, electronic memory, or any computer readable storage medium) in which a computer program product is stored, in the form of a set of program-code instructions to be executed in order to implement all or part of the steps of the generating and/or testing method. Alternatively, or in combination thereof, the computer system can comprise one or more programmable logic circuits (FPGA, PLD, etc.), and/or one or more specialized integrated circuits (ASIC), etc., adapted for implementing all or part of said steps of the generating and/or testing method and/or part of the modules described above. In other words, the computer system comprises a set of means configured by software (specific computer program product) and/or by hardware (processor, FPGA, PLD, ASIC, etc.) to implement the steps of the generating and/or testing method.

## Claims

1. A shaping method for the transmission of data frames within a communication network, the shaping method being implemented by an electronic device comprising at least one processor and a memory, the method comprising the following steps:
- determining (S01), for at least one current queue (Qₖ) of a set of transmission queues (Q₁, Q₂; ..., Qₙ), frames to be transmitted for this at least one current queue (Qₖ),
- calculating (S02), as a function of the number of frames to be transmitted for this at least one current queue (Qₖ), at least one delay (ST) between the end of a transmission of frames to be transmitted and the beginning of a next time slot for transmission of frames of the at least one current queue (Qₖ),
and comprising:
- when the at least one delay is greater than a predetermined amount of time (STp), setting (S11) a network controller to an idle mode as a function of the at least one delay.

2. The method according to claim 1, wherein, prior to setting (S11) the network controller to the idle mode, the method comprises transmitting (S10) frames that are set to be transmitted for the at least one current queue (Qₖ).

3. The method according to claim 1, wherein at least some of the queues of the set of transmission queues (Q₁, Q₂; ..., Qₙ) are labelled as Critical Cyclic (CC) or Delay Tolerant (DT), and wherein calculating (S02) the delay is function of the label associated with the queues of the set of transmission queues (Q₁, Q₂; ..., Qₙ).

4. The method according to claim 1, wherein calculating (S02) is implemented as a function of repeated time slicing (time slots) for frame transmission during a transmission cycle (cycleₖ, cycleₖ₊₁), said repeated time slicing defining time slots (slot₁, slot₂, ..., slotₙ), each time slot being allocated to the at least one current queue (Qₖ) of the set of queues (Q₁, Q₂; ..., Qₙ).

5. The method according to claim 1, wherein each frame (fₖⁱ, fₖⁱ⁺¹) present in the at least one current queue (Qₖ) of the set of queues (Q₁, Q₂; ..., Qₙ) is affected with a time-to-live value (TTL), the time-to-live value of each frame depending on a label associated to the transmission class of the at least one current queue (Qₖ) in which the frame is inserted and/or depending on a number of time-cycle for transmitting the frame.

6. The method according to claim 5, wherein, for each of the at least one current queue (Qₖ) associated to a transmission class (TCₖ), calculating (S03) comprises:
- calculating a next emission time (NETₖ) value by using the minimum time-to-live value of the pending frames of the at least one current queue (Qₖ), the total duration of pending frames of the at least one current queue (Qₖ) and the time start of the next time slot dedicated to the transmission class (TCₖ) in the next transmission time-cycle,
- calculating a burst duration value (BD_{TCk}) for the transmission class (TCₖ).

7. The method according to claim 6, wherein calculating (S03) further comprises:
- If total frames duration is greater than the time slot duration, next emission time (NETₖ) is set to the start of next time slot of the next time-cycle for the transmission class (TCₖ) and burst duration value is set to the time slot duration,
- Otherwise, if the minimum time to live (TTL) is equal to 0, the burst duration (BD_{TCk}) value is set to the sum of duration of frames that have to be sent before all frames with minimum duration and the next emission time (NETₖ) is set to the end of time slot minus the burst duration (BD_{TCk}) value,
- Otherwise, the next emission (NETₖ) time is set to the start time of the time slot of time-cycle n+TTL.

8. The method according to any of the preceding claims, wherein the method is executed upon predetermined events belonging to the group comprising at least:
- after the transmission of the frames of a frame burst,
- on the expiration of a wake-up timer, the wake-up timer being set as a function of the at least one delay,
- on a frame insertion in at least one queue (Qᵢ) of the set of queues (Q₁, Q₂; ..., Qₙ).

9. The method according to claim 8, wherein after the transmission of the frames of a frame burst, the method further comprises:
- calculating the duration of the delay and set a wake-up timer as a function of a waking-up time as negotiated at link startup, wherein the end time of the delay is the smaller of next emission time (NETk) among the queues of the set of transmission queues (Q₁, Q₂; ..., Qₙ), minus the wake-up required time,
- using the end of the delay to set an internal wake-up timer.

10. The method according to claim 9, wherein an energy control mechanism of the network controller implements the following steps:
- activating a Low Power Idle (LPI) mode to move a MAC and PHY layers of the controller in an idle Energy Efficient Ethernet (EEE) state,
- determining which highest Active State Power Management (ASPM) level that can be entered by comparing the delay to at least some of Active State Power Management (ASPM) predetermined transition time values,
- Setting a Latency Tolerance Reporting (LTR) maximum value as a function of the determined Active State Power Management (ASPM) level to inform the underlayer hardware.

11. The method according to claim 8, wherein on the expiration of a wake-up timer, the wake-up timer being set as a function of the at least one delay, the method further comprises:
- for each queue (Qₖ) of a transmission class (TCₖ), determining a next emission time (NETₖ),
- determining the next burst (Bₙ) that is composed of the burst of frames of each queue, wherein determining composition and active burst duration (BDₙ) comprising at least one iteration of:
- obtaining a queue (Qᵢ) and its associated next emission time value (NETᵢ),
- determining if the next emission time value (NETᵢ) is greater than a minimum supported LPI period duration, and if so interrupt determination of the next burst (Bₙ),
- otherwise, adding the frames of the queue (Qᵢ) to the composition of burst (Bₙ), and
- add the queue (Qᵢ) scheduled burst duration to the active burst duration value (BDₙ).

12. The method according to claim 11, wherein prior to obtaining the queue (Qᵢ) and its associated next emission time value (NETᵢ), determining the next burst (Bₙ) comprises ordering the set of queues (Q₁, Q₂; ..., Qₙ) by increasing value of their next emission time.

13. The method according to claim 8, wherein on a frame insertion in at least one queue (Qᵢ) of the set of queues (Q₁, Q₂; ..., Qₙ), the method further comprises:
- setting a time-to-live value (TTL) to the frame that being inserted in said at least one queue (Qᵢ),
- If a current transmission mode is active, determining that the at least one queue (Qᵢ) belongs to the currently emitted burst (Bₙ), and
- updating the burst duration (BD_{TCk}) value and the active burst duration value (BDₙ).

14. A shaping device for the transmission of data frames within a communication network, the shaping device comprising at least one processor and a memory and comprising the necessary components for:
- determining (S01), for at least one current queue (Qₖ) of a set of transmission queues (Q₁, Q₂; ..., Qₙ), frames to be transmitted for this at least one current queue (Qₖ),
- calculating (S02), as a function of the number of frames to be transmitted for this at least one current queue (Qₖ), at least one delay between the end of a transmission of frames to be transmitted and the beginning of a next time slot for transmission of the frames of the at least one current queue (Qₖ),
and comprising:
- when the at least one delay is greater than a predetermined amount of time (STp), setting (S11) a network controller to a idle mode as a function of the at least one delay.

15. A computer program comprising instructions causing the implementation of the method according to anyone of the preceding claims 1-13 when such instructions are run by a processor.

## Patentansprüche

1. Formungsverfahren für die Übertragung von Daten-Frames innerhalb eines Kommunikationsnetzwerks, wobei das Formungsverfahren durch eine elektronische Vorrichtung implementiert wird, welche wenigstens einen Prozessor und einen Speicher umfasst, wobei das Verfahren die folgenden Schritte umfasst:
- Bestimmen (S01), für wenigstens eine aktuelle Warteschlange (Qₖ) eines Satzes von Übertragungsschlangen (Q₁, Q₂; ..., Qₙ), wobei Frames für diese wenigstens eine aktuelle Warteschlange (Qₖ) zu übertragen sind,
- Berechnen (S02), als eine Funktion der Anzahl von zu übertragenden Frames für diese wenigstens eine aktuelle Warteschlange (Qₖ), von wenigstens einer Verzögerung (ST) zwischen dem Ende einer Übertragung von zu übertragenden Frames und dem Beginn eines nächsten Zeitslots für eine Übertragung von Frames der wenigstens eine aktuelle Warteschlange (Qₖ),
und umfassend:
- wenn die wenigstens eine Verzögerung größer als eine vorbestimmte Zeitmenge (STp) ist, Setzen (S11) einer Netzwerk-Steuereinheit auf einen Ruhemodus als eine Funktion der wenigstens einen Verzögerung.

2. Verfahren nach Anspruch 1, wobei vor dem Setzen (S11) der Netzwerk-Steuereinheit auf den Ruhemodus das Verfahren ein Übertragen (S10) von Frames umfasst, welche für die wenigstens eine aktuelle Warteschlange (Qₖ) als zu übertragen gesetzt sind.

3. Verfahren nach Anspruch 1, wobei wenigstens einige der Schlangen des Satzes von Übertragungsschlangen (Q₁, Q₂; ..., Qₙ) als Critical Cyclic (CC) oder Delay Tolerant (DT) markiert werden, und wobei das Berechnen (S02) der Verzögerung eine Funktion der Markierung ist, welche den Schlangen des Satzes von Übertragungsschlangen (Q₁, Q₂; ..., Qₙ) zugeordnet ist.

4. Verfahren nach Anspruch 1, wobei das Berechnen (S02) als eine Funktion einer wiederholten Zeitunterteilung (Zeitslots) für eine Frame-Übertragung während eines Übertragungszyklus (cycleₖ, cycleₖ₊₁) implementiert wird, wobei die wiederholte Zeitunterteilung Zeitslots (slot₁, slot₂, ..., slotₙ) definiert, wobei jeder Zeitslot der wenigstens eine aktuelle Warteschlange (Qₖ) des Satzes von Schlangen (Q₁, Q₂; ..., Qₙ) zugeordnet ist.

5. Verfahren nach Anspruch 1, wobei jeder Frame (fₖⁱ, fₖⁱ⁺¹), welcher in der wenigstens eine aktuelle Warteschlange (Qₖ) des Satzes von Schlangen (Q₁, Q₂; ..., Qₙ) vorliegt, mit einem Lebenszeit-Wert (TTL) beeinflusst wird, wobei der Lebenszeit-Wert jedes Frames von einer Markierung abhängt, welche der Übertragungsklasse der wenigstens eine aktuelle Warteschlange (Qₖ) zugeordnet wird, in welcher der Frame eingesetzt wird, und/oder von einer Anzahl von Zeitzyklen zum Übertragen des Rahmens abhängt.

6. Verfahren nach Anspruch 5, wobei für jede der wenigstens eine aktuelle Warteschlange (Qₖ), welche einer Übertragungsklasse (TCₖ) zugeordnet wird, das Berechnen (S03) umfasst:
- Berechnen eines nächsten Emissionszeit (NETₖ)-Werts durch Verwenden des minimalen Lebenszeit-Werts der wartenden Frames der wenigstens eine aktuelle Warteschlange (Qₖ), der gesamten Dauer von wartenden Frames der wenigstens eine aktuelle Warteschlange (Qₖ) und des Zeitstarts des nächsten Zeitslots, welcher der Übertragungsklasse (TCₖ) in dem nächsten Übertragung-Zeitzyklus gewidmet ist,
- Berechnen eines Burst-Dauerwerts (BD_{TCK}) für die Übertragungsklasse (TCₖ).

7. Verfahren nach Anspruch 6, wobei das Berechnen (S03) ferner umfasst:
- wenn eine gesamte Frames-Dauer größer als die Zeitslot-Dauer ist, wird eine nächste Emissionszeit (NETₖ) auf den Start des nächsten Zeitslots des nächsten Zeitzyklus für die Übertragungsklasse (TCₖ) gesetzt und ein Burst-Dauerwert wird auf die Zeitslot-Dauer gesetzt,
- andernfalls, falls die minimale Lebenszeit (TTL) gleich 0 ist, wird der Burst-Dauer (BD_{TCk})-Wert auf die Summe einer Dauer von Frames gesetzt, welche vor allen Frames mit minimaler Dauer gesendet worden sind, und die nächste Emissionszeit (NETₖ) wird auf das Ende des Zeitslots minus den Burst-Dauer (BD_{TCk})-Wert gesetzt,
- andernfalls wird die nächste Emissions (NETₖ)-Zeit auf die Startzeit des Zeitslots des Zeitzyklus n+TTL gesetzt.

8. Verfahren nach einem der vorhergehenden Ansprüche, wobei das Verfahren auf vorbestimmte Ereignisse hin ausgeführt wird, welche zu der Gruppe gehören, welche wenigstens umfasst:
- nach der Übertragung der Frames eines Frame-Bursts,
- auf das Ablaufen eines Aufwach-Timers hin, wobei der Aufwach-Timer als eine Funktion der wenigstens einen Verzögerung gesetzt wird,
- auf ein Frame-Einsetzen in wenigstens eine Schlange (Qᵢ) des Satzes von Schlangen (Q₁, Q₂; ..., Qₙ) hin.

9. Verfahren nach Anspruch 8, wobei nach dem Übertragen der Frames eines Frame-Bursts das Verfahren ferner umfasst:
- Berechnen der Dauer der Verzögerung und Setzen eines Aufwach-Timers als eine Funktion einer Aufwachzeit wie bei einem Link-Startup verhandelt, wobei die Endzeit der Verzögerung die kleinere einer nächsten Emissionszeit (NETₖ) unter den Schlangen des Satzes von Übertragungsschlangen (Q₁, Q₂; ..., Qₙ) ist, minus die für das Aufwachen benötigte Zeit,
- Verwenden des Endes der Verzögerung zum Setzen eines internen Aufwach-Timers.

10. Verfahren nach Anspruch 9, wobei ein Energie-Steuermechanismus der Netzwerk-Steuereinheit die folgenden Schritte implementiert:
- Aktivieren eines Low Power Idle (LPI)-Modus zum Überführen von MAC- und PHY-Schichten der Steuereinheit in einen ruhenden Zustand des Energy Efficient Ethernet (EEE),
- Bestimmen, in welches höchste Active State Power Management (ASPM)-Niveau eingetreten werden kann, durch Vergleichen der Verzögerung mit wenigstens einigen der vorbestimmten Übergangszeit-Werte des Active State Power Managements (ASPM),
- Setzen eines Latency Tolerance Reporting (LTR)-Maximalwerts als eine Funktion des bestimmten Active State Power Management (ASPM)-Niveaus, um die darunterliegende Hardware zu informieren.

11. Verfahren nach Anspruch 8, wobei auf das Ablaufen des Aufwach-Timers hin, wenn der Aufwach-Timer als eine Funktion der wenigstens einen Verzögerung gesetzt wird, das Verfahren ferner umfasst:
- für jede Schlange (Qₖ) einer Übertragungsklasse (TCₖ), Bestimmen einer nächsten Emissionszeit (NETₖ),
- Bestimmen des nächsten Bursts (Bₙ), welcher aus dem Burst von Frames von jeder Schlange besteht,
wobei das Bestimmen einer Zusammensetzung und einer aktiven Burst-Dauer (BDₙ) wenigstens eine Iteration umfasst aus:
- Erhalten einer Schlange (Qᵢ) und ihres zugeordneten nächsten Emissionszeit-Werts (NETᵢ),
- Bestimmen, ob der nächste Emissionszeit-Wert (NETᵢ) größer als eine minimale unterstützte LPI-Periodendauer ist, und falls ja, Unterbrechen einer Bestimmung des nächsten Bursts (Bₙ),
- Andernfalls, Hinzufügen der Frames der Schlange (Qᵢ) zu der Zusammensetzung des Bursts (Bₙ), und
- Hinzufügen der terminierten Schlangen (Qᵢ)-Burst-Dauer zu dem aktiven Bursts-Dauerwert (BDₙ).

12. Verfahren nach Anspruch 11, wobei vor dem Erhalten der Schlange (Qᵢ) und ihres zugeordneten nächsten Emissionszeit-Werts (NETᵢ) das Bestimmen des nächsten Bursts (Bₙ) ein Ordnen des Satzes der Schlangen (Q₁, Q₂; ..., Qₙ) nach ansteigendem Wert ihrer nächsten Emissionszeit umfasst.

13. Verfahren nach Anspruch 8, wobei auf ein Frame-Einsetzen in wenigstens eine Schlange (Qᵢ) aus dem Satz von Schlangen (Q₁, Q₂; ..., Qₙ) hin das Verfahren ferner umfasst:
- Setzen eines Lebenszeit-Werts (TTL) für den Frame, welcher in die wenigstens eine Schlange (Qᵢ) eingesetzt wird,
- wenn ein momentaner Übertragungsmodus aktiv ist, Bestimmen, dass die wenigstens eine Schlange (Qᵢ) zu dem momentan emittierten Burst (Bₙ) gehört, und
- Aktualisieren des Burst-Dauer (BD_{TCk})-Werts und des aktiven Burst-Dauerwerts (BDₙ).

14. Vorrichtung zur Formung für die Übertragung von Daten-Frames innerhalb eines Kommunikationsnetzwerks, wobei die Formungsvorrichtung wenigstens einen Prozessor und einen Speicher umfasst und die notwendigen Komponenten umfasst für:
- Bestimmen (S01), für wenigstens eine aktuelle Warteschlange (Qₖ) eines Satzes von Übertragungsschlangen (Q₁, Q₂; ..., Qₙ), wobei Frames für diese wenigstens eine aktuelle Warteschlange (Qₖ) zu übertragen sind,
- Berechnen (S02), als eine Funktion der Anzahl von zu übertragenden Frames für diese wenigstens eine aktuelle Warteschlange (Qₖ), von wenigstens einer Verzögerung zwischen dem Ende einer Übertragung von zu übertragenden Frames und dem Beginn eines nächsten Zeitslots für eine Übertragung der Frames der wenigstens eine aktuelle Warteschlange (Qₖ),
und umfassend:
- wenn die wenigstens eine Verzögerung größer als eine vorbestimmte Zeitmenge (STp) ist, Setzen (S11) einer Netzwerk-Steuereinheit auf einen Ruhemodus als eine Funktion der wenigstens einen Verzögerung.

15. Computerprogramm, umfassend Anweisungen, welche die Implementierung des Verfahrens nach einem der vorhergehenden Ansprüche 1-13 veranlassen, wenn derartige Anweisungen durch einen Prozessor ausgeführt werden.

## Revendications

1. Procédé de mise en forme pour l'émission de trames de données au sein d'un réseau de communication, le procédé de mise en forme étant mis en œuvre par un dispositif électronique comprenant au moins un processeur et une mémoire, le procédé comprenant les étapes suivantes :
- la détermination (S01), pour au moins une file d'attente (Qₖ) courante d'un ensemble de files d'attente (Q₁, Q₂ ; ..., Qₙ) d'émission, de trames à émettre pour cette au moins une file d'attente (Qₖ) courante,
- le calcul (S02), en fonction du nombre de trames à émettre pour cette au moins une file d'attente (Qₖ) courante, d'au moins un délai (ST) entre la fin d'une émission de trames à émettre et le commencement d'un intervalle de temps suivant pour l'émission de trames de l'au moins une file d'attente (Qₖ) courante,
et comprenant :
- lorsque l'au moins un délai est supérieur à un laps de temps prédéterminé (STp), le réglage (S11) d'un dispositif de contrôle de réseau sur un mode inactif en fonction de l'au moins un délai.

2. Procédé selon la revendication 1, dans lequel, avant de régler (S11) le dispositif de contrôle de réseau sur le mode inactif, le procédé comprend l'émission (S10) de trames qui sont réglées pour être émises pour l'au moins une file d'attente (Qₖ) courante.

3. Procédé selon la revendication 1, dans lequel au moins certaines des files d'attente de l'ensemble de files d'attente (Q₁, Q₂; ..., Qₙ) d'émission sont étiquetées comme cycliques critiques (CC) ou tolérantes aux délais (DT), et dans lequel le calcul (S02) du délai est fonction de l'étiquette associée aux files d'attente de l'ensemble de files d'attente (Q₁, Q₂ ; ..., Qₙ) d'émission.

4. Procédé selon la revendication 1, dans lequel le calcul (S02) est mis en œuvre en fonction d'un découpage de temps répété (intervalles de temps) pour l'émission de trames pendant un cycle d'émission (cycleₖ, cycleₖ₊₁), ledit découpage de temps répété définissant des intervalles de temps (slot₁, slot₂, ..., slotₙ), chaque intervalle de temps étant attribué à l'au moins une file d'attente (Qₖ) courante de l'ensemble de files d'attente (Q₁, Q₂ ; ..., Qₙ).

5. Procédé selon la revendication 1, dans lequel chaque trame (fₖⁱ, fₖⁱ⁺¹) présente dans l'au moins une file d'attente (Qₖ) courante de l'ensemble de files d'attente (Q₁, Q₂ ; ..., Qₙ) est dotée d'une valeur de durée de vie (TTL), la valeur de durée de vie de chaque trame dépendant d'une étiquette associée à la classe d'émission de l'au moins une file d'attente (Qₖ) courante dans laquelle la trame est insérée et/ou dépendant d'un nombre de cycles de temps pour émettre la trame.

6. Procédé selon la revendication 5, dans lequel, pour chacune de l'au moins une file d'attente (Qₖ) courante associée à une classe d'émission (TCₖ), le calcul (S03) comprend :
- le calcul d'une valeur de temps d'émission suivant (NETₖ) en utilisant la valeur de durée de vie minimale des trames en attente de l'au moins une file d'attente (Qₖ) courante, la durée totale de trames en attente de l'au moins une file d'attente (Qₖ) courante et le début de temps de l'intervalle de temps suivant dédié à la classe d'émission (TCₖ) dans le cycle de temps d'émission suivant, - le calcul d'une valeur de durée de rafale (BD_{TCk}) pour la classe d'émission (TCₖ).

7. Procédé selon la revendication 6, dans lequel le calcul (S03) comprend en outre :
- si la durée totale de trames est supérieure à la durée d'intervalle de temps, le temps d'émission suivant (NETₖ) est réglé sur le début d'un intervalle de temps suivant du cycle de temps suivant pour la classe d'émission (TCₖ) et la valeur de durée de rafale est réglée sur la durée d'intervalle de temps,
- sinon, si la durée de vie minimale (TTL) est égale à 0, la valeur de durée de rafale (BD_{TCk}) est réglée sur la somme de la durée de trames qui doivent être envoyées avant toutes les trames avec une durée minimale et le temps d'émission suivant (NETₖ) est réglé sur la fin de l'intervalle de temps moins la valeur de durée de rafale (BD_{TCk}),
- sinon, le temps d'émission suivant (NETₖ) est réglé sur le temps de début de l'intervalle de temps du cycle de temps n + TTL.

8. Procédé selon l'une quelconque des revendications précédentes, dans lequel le procédé est exécuté lors d'événements prédéterminés appartenant au groupe comprenant au moins :
- après l'émission des trames d'une rafale de trames,
- à l'expiration d'un temporisateur de réveil, le temporisateur de réveil étant réglé en fonction de l'au moins un délai,
- lors d'une insertion de trame dans au moins une file d'attente (Qᵢ) de l'ensemble de files d'attente (Q₁, Q₂ ; ..., Qₙ).

9. Procédé selon la revendication 8, dans lequel après l'émission des trames d'une rafale de trames, le procédé comprend en outre :
- le calcul de la durée du délai et le réglage d'un temporisateur de réveil en fonction d'un temps de réveil tel que négocié au démarrage de la liaison, dans lequel le temps de fin du délai est le plus petit temps d'émission suivant (NETₖ) parmi les files d'attente de l'ensemble de files d'attente (Q₁, Q₂ ; ..., Qₙ) d'émission, moins le temps de réveil requis,
- l'utilisation de la fin du délai pour régler un temporisateur de réveil interne.

10. Procédé selon la revendication 9, dans lequel un mécanisme de contrôle d'énergie du dispositif de contrôle de réseau met en œuvre les étapes suivantes :
- l'activation d'un mode inactif à faible puissance (LPI) pour déplacer des couches MAC et PHY du dispositif de contrôle dans un état inactif Energy Efficient Ethernet (EEE),
- la détermination du niveau de gestion de puissance à l'état actif (ASPM) le plus élevé qui puisse être adopté en comparant le délai à au moins certaines valeurs de temps de transition prédéterminées de gestion de puissance à l'état actif (ASPM),
- le réglage d'une valeur maximale de rapport de tolérance à la latence (LTR) en fonction du niveau de gestion de puissance à l'état actif (ASPM) déterminé pour informer le matériel de sous-couche.

11. Procédé selon la revendication 8, dans lequel à l'expiration d'un temporisateur de réveil, le temporisateur de réveil étant réglé en fonction de l'au moins un délai, le procédé comprend en outre :
- pour chaque file d'attente (Qₖ) d'une classe d'émission (TCₖ), la détermination d'un temps d'émission suivant (NETₖ),
- la détermination de la rafale (Bₙ) suivante qui est composée de la rafale de trames de chaque file d'attente, dans lequel la détermination de la composition et de la durée active de rafale (BDₙ) comprend au moins une itération de :
- l'obtention d'une file d'attente (Qᵢ) et de sa valeur de temps d'émission suivant (NETᵢ) associée,
- le fait de déterminer si la valeur de temps d'émission suivant (NETᵢ) est supérieure à une durée de période LPI prise en charge minimale, et, si c'est le cas, l'interruption de la détermination de la rafale (Bₙ) suivante,
- sinon, l'ajout des trames de la file d'attente (Qᵢ) à la composition de rafale (Bₙ), et
- l'ajout de la durée de rafale programmée de la file d'attente (Qᵢ) à la valeur de durée de rafale active (BDₙ).

12. Procédé selon la revendication 11, dans lequel, avant l'obtention de la file d'attente (Qᵢ) et de sa valeur de temps d'émission suivant (NETᵢ) associée, la détermination de la rafale (Bₙ) suivante comprend l'ordonnancement de l'ensemble de files d'attente (Q₁, Q₂ ; ..., Qₙ) par ordre croissant de leur temps d'émission suivant.

13. Procédé selon la revendication 8, dans lequel lors d'une insertion de trame dans au moins une file d'attente (Qi) de l'ensemble de files d'attente (Q₁, Q₂ ; ..., Qₙ), le procédé comprend en outre :
- l'attribution d'une valeur de durée de vie (TTL) à la trame la trame qui est insérée dans ladite au moins une file d'attente (Qᵢ),
- si un mode d'émission courant est actif, le fait de déterminer que l'au moins une file d'attente (Qᵢ) appartient à la rafale (Bₙ) couramment émise, et
- la mise à jour de la valeur de durée de rafale (BD_{TCk}) et de la valeur de durée de rafale active (BDₙ).

14. Dispositif de mise en forme pour l'émission de trames de données au sein d'un réseau de communication, le dispositif de mise en forme comprenant au moins un processeur et une mémoire et comprenant les éléments nécessaires pour :
- déterminer (S01), pour au moins une file d'attente (Qₖ) courante d'un ensemble de files d'attente (Q₁, Q₂ ; ..., Qₙ) d'émission, des trames à émettre pour cette au moins une file d'attente (Qₖ) courante,
- calculer (S02), en fonction du nombre de trames à émettre pour cette au moins une file d'attente (Qₖ) courante, au moins un délai entre la fin d'une émission de trames à émettre et le commencement d'un intervalle de temps suivant pour l'émission des trames de l'au moins une file d'attente (Qₖ) courante,
et comprenant :
- lorsque l'au moins un délai est supérieur à un laps de temps prédéterminé (STp),
- le réglage (S11) d'un dispositif de contrôle de réseau sur un mode inactif en fonction de l'au moins un délai.

15. Programme informatique comprenant des instructions provoquant la mise en œuvre du
procédé selon l'une quelconque des revendications 1 à 13 précédentes lorsque ces instructions sont exécutées par un processeur.
